# DEMANDE DE BREVET EUROPEEN

(11) **EP 2 241 882 A1**
(43) Date de publication de la demande: **20.10.2010**
(21) Numéro de dépôt: 09157979.7
(22) Date de dépôt: 15.04.2009
(51) Int. Cl.: G01N 27/49

(54) **Capteur électrochimique ampérométrique et son procédé de fabrication**

(71) Demandeur: Neroxis SA, 2000 Neuchâtel (CH)
(72) Inventeur: De Coulon, Yves, 2072, St-Blaise (CH); Beriet, Carine, 2034, Peseux (CH); Niedermann, Philippe, 2034 Peseux (CH)
(74) Mandataire: GLN

(57) **Abrégé**

La présente invention concerne un capteur électrochimique ampérométrique destiné à être utilisé dans une sonde pour mesurer la teneur d'une substance oxydoréductible dans un liquide, et en particulier la teneur en chlore.
Le capteur (1) comprend un substrat isolant (2), un jeu d'électrodes composé d'une électrode de travail (3), d'une contre-électrode (4) et d'une électrode de référence, au moins l'une desdites électrode de travail (3) et contre-électrode (4) étant configurée sur ledit substrat isolant (2). Au moins l'une desdites électrode de travail (3) et contre-électrode (4) est recouverte d'une couche d'isolant (8), ladite couche d'isolant (8) comprenant au moins une ouverture laissant apparaitre au moins l'une desdites électrode de travail (3) et contre-électrode (4).

## Description

### Domaine technique

La présente invention se rapporte au domaine des capteurs électrochimiques. Elle concerne, plus particulièrement, un capteur électrochimique ampérométrique destiné à être utilisé dans une sonde pour mesurer la teneur d'une substance oxydoréductible dans un liquide, et en particulier la teneur en chlore.

### Etat de la technique

De tels capteurs sont par exemple décrits dans les brevets US 7087150 et EP 0 586 982. Le premier brevet présente une sonde électrochimique classique avec des électrodes métalliques macroscopiques en métal noble plongeant dans un liquide réactif contenant de la chloramine séparé du milieu aqueux par une membrane perméable vissée sur le corps de sonde. Le brevet EP0586982 décrit un premier type de capteur intégré comprenant un substrat isolant sur lequel sont formées trois électrodes, à savoir une électrode de travail, une contre-électrode et une électrode de référence. Les électrodes sont ensuite recouvertes d'une membrane de diffusion, qui recouvre l'ensemble des trois électrodes.

Un autre type de capteur est également décrit et comprend un substrat isolant comprenant une couche d'isolant, dans laquelle sont réalisées des ouvertures. Chaque ouverture reçoit un dépôt de métal destiné à former l'une des électrodes. Une membrane de diffusion recouvre entièrement la partie conductrice active de l'électrode de travail en débordant par toute sa zone périphérique.

Un tel type de capteur nécessite d'adapter la couche d'isolant à chaque variante de réalisation des électrodes et donc de modifier l'ensemble du procédé de fabrication en fonction de la forme recherchée des électrodes.

De plus, l'agencement des couches nécessite de prévoir une zone de contact sous les électrodes. Par ailleurs, la dimension géométrique de l'électrode de travail doit être suffisante, de plusieurs centaines de micromètres à un millimètre, pour permettre d'y déposer la membrane.

Un but de la présente invention est donc de pallier ces inconvénients, en proposant un capteur pouvant être réalisé selon un procédé de réalisation simple et dont seule une étape doit être modifiée pour réaliser des électrodes présentant la forme recherchée, toutes les autres étapes du procédé étant communes quel que soit le type d'électrodes.

Un autre but de la présente invention est de proposer un capteur dont la durée de vie est améliorée notamment en augmentant l'adhésion de la membrane polymère utilisée comme membrane de diffusion sur un isolant choisi.

Un autre but de la présente invention est de proposer un procédé de fabrication permettant la réalisation d'une structure nanométrique d'isolant entre la membrane et les électrodes.

Un autre but de la présente invention est de proposer un capteur permettant d'accéder directement aux électrodes pour réaliser les connexions.

Un autre but de la présente invention est de proposer un capteur permettant d'avoir un substrat autre qu'un substrat de silicium, et notamment un substrat transparent.

Un autre but de la présente invention est de proposer un capteur permettant d'être miniaturisé, sans électrolyte liquide, et d'utiliser dans une même sonde deux mêmes capteurs dans un espace limité.

### Divulgation de l'invention

A cet effet, il est proposé un capteur électrochimique ampérométrique destiné à la mesure de la teneur d'une substance oxydoréductible dans un liquide, comprenant un substrat isolant, un jeu d'électrodes composé d'une électrode de travail, d'une contre-électrode et d'une électrode de référence, au moins l'une desdites électrode de travail et contre-électrode étant configurée sur ledit substrat isolant. Selon l'invention, au moins l'une desdites électrode de travail et contre-électrode est recouverte d'une couche d'isolant, et ladite couche d'isolant comprend au moins une ouverture laissant apparaitre au moins l'une desdites électrode de travail et contre-électrode, de sorte que la périphérie de l'électrode est recouverte par la couche d'isolant.

D'une manière avantageuse, ladite ouverture peut avoir été formée par gravure de la couche d'isolant au moyen d'un masque, en particulier un masque photolithographique, dont la configuration est variable en fonction de la configuration de l'électrode souhaitée.

Selon les variantes de réalisation, le capteur peut comprendre en outre au moins une première membrane polymère déposée dans ladite ouverture.

De préférence, la membrane peut recouvrir entièrement ladite ouverture en débordant sur la couche d'isolant par toute sa zone périphérique.

Selon une variante de réalisation, le capteur peut comprendre une électrode de travail non-planaire disposée dans le substrat isolant, ladite membrane étant réalisée de sorte que sa surface supérieure est au niveau du substrat isolant comprenant la contre-électrode.

Selon les variantes de réalisation, le capteur peut comprendre une première membrane polymère pour définir une couche de diffusion et une seconde membrane polymère déposée sur la première membrane pour sélectionner les espèces à mesurer.

Selon les variantes de réalisation, la couche d'isolant peut comprendre plusieurs ouvertures séparées par des ilots de matériau isolant, de manière à laisser apparaitre un ensemble d'éléments d'électrode. La première membrane polymère peut alors recouvrir toutes les ouvertures ou peut comporter plusieurs éléments de membrane recouvrant respectivement chaque ouverture en débordant individuellement sur la couche d'isolant par toute leur zone périphérique respective.

D'une manière avantageuse, la couche d'isolant peut comprendre des ouvertures nanostructurées homogènes réparties sur la surface de l'électrode aléatoirement ou de manière géométrique.

De préférence, le substrat peut être réalisé dans un matériau choisi parmi le groupe comprenant le silicium, le verre, les céramiques et le quartz.

Selon les variantes de réalisation, au moins l'une des électrode de travail et contre-électrode peut présenter une forme choisie parmi le groupe de forme circulaire, microperforée ou interdigitée.

D'une manière avantageuse, le capteur peut comprendre des moyens de connexion pour relier les électrodes à un circuit de mesure, lesdits moyens de connexion étant directement reliés aux électrodes.

La présente invention concerne également un procédé de fabrication d'un capteur tel que décrit ci-dessus, et comprenant les étapes de:
- déposer sur un substrat isolé une couche d'un matériau conducteur,
- graver ledit matériau conducteur pour délimiter au moins l'une desdites électrode de travail et contre-électrode,
- déposer sur la couche de matériau conducteur une couche d'isolant spécifique à basse température, et
- réaliser dans la couche d'isolant au moins une ouverture laissant apparaitre au moins l'une desdites électrode de travail et contre-électrode.

Avantageusement, l'étape pour réaliser au moins une ouverture dans la couche d'isolant est réalisée par gravure à l'aide d'un masque photolithographique dont la configuration est variable en fonction de la configuration de l'électrode souhaitée.

Ce procédé permet de modifier seulement la dernière étape définie ci-dessus en modifiant le masque utilisé pour réaliser les ouvertures pour qu'il corresponde à la forme recherchée des électrodes. Les autres étapes du procédé restent communes à toutes les formes d'électrodes.

De préférence, le procédé peut comprendre en outre une étape consistant à couvrir la couche d'isolant et ses ouvertures d'au moins une membrane polymère.

La présente invention concerne également une sonde ampérométrique pour mesurer la teneur d'une substance oxydoréductible dans un liquide comprenant au moins un capteur tel que défini ci-dessus.

D'une manière avantageuse, la sonde peut comprendre un corps contenant des moyens de traitement des données et des moyens de transmission et une tête sèche, sans électrolyte et détachable, dans laquelle est disposé le capteur ou les capteurs pour la redondance.

D'une manière avantageuse, la tête détachable est jetable et contient les informations de calibration de la sonde et un identificateur numérique unique de la tête.

Une telle sonde de mesure électrochimique permet de réaliser des opérations de mesure dans un fluide sous pression jusqu'à 10 bars sans aucune maintenance et sans re-calibration sur une période d'une année.

### Brève description des dessins

D'autres caractéristiques de l'invention ressortiront de la description qui va suivre, faite en regard des dessins annexés, dans lesquels :
- la figure 1 est une vue de dessus et en coupe d'une variante de réalisation d'un capteur selon l'invention;
- la figure 2 est une vue en coupe d'une autre variante de réalisation d'un capteur selon l'invention;
- la figure 3 est une vue de dessus d'une autre variante de réalisation d'un capteur selon l'invention;
- la figure 4 représente les différentes étapes d'un procédé de fabrication selon l'invention;
- la figure 5 représente une vue en coupe schématisée de la tête d'une sonde selon l'invention;
- la figure 6 représente schématiquement le montage de deux capteurs utilisés dans une même tête de sonde;
- la figure 7 représente schématiquement le corps d'une sonde selon l'invention, et
- la figure 8 représente schématiquement une sonde selon l'invention.

### Mode(s) de réalisation de l'invention

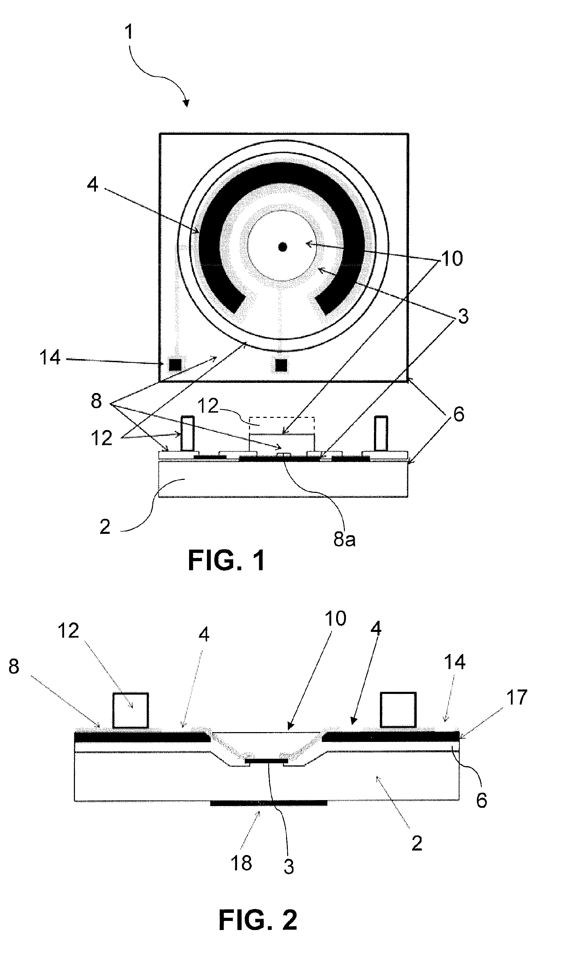

En référence à la figure 1, il est représenté un capteur 1 électrochimique ampérométrique destiné à la mesure de la teneur d'une substance oxydoréductible dans un liquide, comprenant un substrat isolant 2, un jeu d'électrodes composé d'une électrode de travail 3, d'une contre-électrode 4 et d'une électrode de référence (non représentée), l'électrode de travail 3 et la contre-électrode 4 étant configurée sur ledit substrat isolant 2. Dans la présente description, le terme "substrat isolant" désigne un substrat plan, isolant de manière intrinsèque (verre, céramique ou quartz par exemple) ou un substrat conducteur (silicium par exemple) rendu isolant par l'application d'une première couche d'isolant. Lorsque le substrat est isolant intrinsèquement, la première couche d'isolant n'est pas nécessaire.

Le principe de mesure ampérométrique est basé sur celui d'une cellule de Clark avec une électrode de travail, une contre-électrode et une électrode de référence. Ce principe d'ampérométrie est basé sur la mesure du courant entre l'électrode de travail et la contre-électrode qui est induit par une réaction d'oxydoréduction au niveau de l'électrode de travail. La référence est choisie de sorte que le courant mesuré à l'électrode de travail est directement proportionnel à la concentration d'une substance oxydoréductible dans le liquide à analyser. Cette substance oxydoréductible peut être par exemple le chlore sous forme HOCI ou ClO₂. Le capteur détecte également les bio-chlores, ou le chlore produit par les systèmes d'électrolyse eau-sel. Le potentiel électrique de l'électrode de travail par rapport au liquide mesuré est obtenu par une électrode de référence séparée et est contrôlé par un système électronique potentiostatique.

Dans les exemples représentés, le substrat 2 est en silicium, découpé, après les traitements photolithographiques appropriés, d'une plaquette de silicium d'une manière traditionnelle dans la technique de fabrication des composants semi-conducteurs. Il est ensuite recouvert d'une première couche d'isolant 6, par exemple de l'oxyde de silicium SiO2, de manière à obtenir un substrat isolant.

L'électrode de travail 3 et la contre-électrode 4 sont déposées sous la forme d'un film fin métallique sur la première couche d'isolant 6. Les électrodes peuvent être en platine, or, titane, ruthénium ou en diamant amorphe.

Conformément à l'invention, l'électrode de travail 3 et la contre-électrode 4 sont recouvertes d'une seconde couche d'isolant 8, réalisée de préférence en nitrure de silicium (Si₃N₄), ladite seconde couche d'isolant 8 comprenant différentes ouvertures laissant apparaitre le métal pour former les surfaces actives de l'électrode de travail 3 et de la contre-électrode 4. La périphérie des électrodes reste recouverte et protégée par la seconde couche d'isolant 8. Cette seconde couche d'isolant est déposée à basse température pour ne pas nuire aux couches conductrices constituant l'électrode de travail 3 et la contre-électrode 4, qui peuvent être réalisées en différents type de métaux par exemple.

Les ouvertures, microscopiques ou nanoscopiques, peuvent être formées dans la seconde couche d'isolant 8 par les techniques traditionnelles de gravure au moyen d'un masque photolithographique. Cette technique permet de réaliser un substrat isolant comportant un film métallique et la seconde couche d'isolant commun à tous les capteurs, et de prévoir seulement lors de l'étape de gravure de la seconde couche d'isolant un masque photolithographique de géométrie adaptée à la forme souhaitée de l'électrode de travail et de la contre-électrode.

Ainsi, en fonction de la géométrie du masque, il est possible d'obtenir une structuration de la seconde couche d'isolant 8 de manière à créer des électrodes carrées, circulaires, microperforées pour former un réseau de micro-électrodes d'une dimension de quelques dizaines de micromètres, des électrodes interdigitées.

Par exemple, en référence à la figure 1, la seconde couche d'isolant 8 est gravée de manière à former des ouvertures circulaires en laissant un élément ou ilot 8a de matériau isolant au centre de l'électrode de travail 3.

La seconde couche d'isolant 8 peut également comprend des ouvertures nanostructurées formées en réalisant sur la seconde couche d'isolant 8 des nanostructures aléatoires, qui sont ensuite gravées pour former lesdites ouvertures nanostructurées disposées aléatoirement sur la surface de l'électrode mais de manière homogène. Les nanostructures peuvent être formées par séparation de phases de deux polymères non miscibles par enduction centrifuge (spin coating). La taille latérale moyenne des ouvertures peut être ajustée en jouant sur les paramètres du procédé (nature des polymères, vitesse de l'enduction centrifuge et poids des polymères).

Les ouvertures réalisées dans la seconde couche d'isolant 8 sont remplies par une première membrane polymère 10 qui définit la couche de diffusion de l'oxydation ou de la réduction électrochimique. De préférence, la membrane 10 recouvre entièrement les ouvertures en débordant sur la couche d'isolant 8 par toute sa zone périphérique.

Selon les variantes, une seule première membrane polymère continue peut être utilisée pour recouvrir toute les ouvertures. Selon d'autres variantes, la première membrane polymère est formée de plusieurs éléments de membrane qui recouvrent respectivement chaque ouverture en débordant individuellement sur les différents éléments de la seconde couche d'isolant 8 par toute leur zone périphérique respective.

Ainsi, la membrane de diffusion 10 adhère aux électrodes métalliques mais adhère également à la seconde couche d'isolant 8 au niveau de la périphérie des ouvertures et des ilots de matériau isolant laissé entre les ouvertures. De plus, la forme des ouvertures et des électrodes peut être choisie de manière à régler la proportion de surface de contact membrane polymère/couche d'isolant et membrane polymère/électrodes. Enfin, le matériau de la seconde couche d'isolant 8, tel que nitrure ou oxyde de silicium, permet d'établir des liaisons covalente avec la membrane polymère 10 grâce à des traitements chimiques de surface au cours de procédé de fabrication.

Ainsi, l'adhésion de la membrane 10 est grandement améliorée, ce qui conduit à augmenter les performances du capteur en termes de sélectivité, de stabilité et de fiabilité, sur une période d'un an dans l'eau sans recalibration ou entretien.

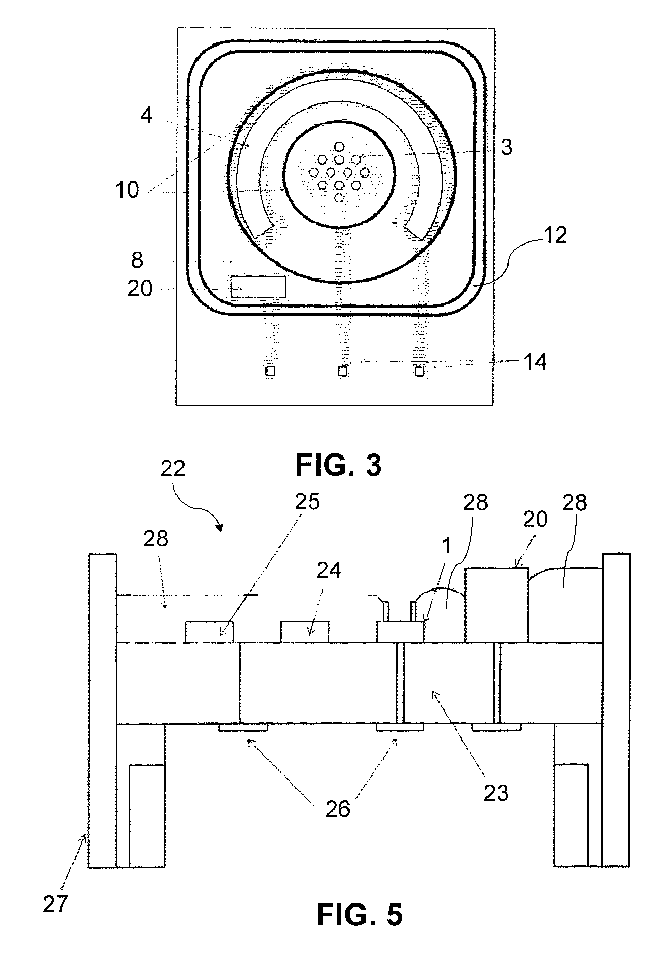

La première membrane polymère 10 est de préférence une membrane en poly-hydroxyéthyle-métacrylate (polyHEMA). Elle est photopolymérisée sur la plaquette de silicium avec un masque dont la géométrie est définie de manière à ce que la membrane 10 recouvre soit les ouvertures de la seconde couche d'isolant 8 délimitant l'électrode de travail seule, comme le cercle représenté sur la figure 1, ou l'électrode de travail et la contre-électrode, soit le capteur entier, comme représenté sur la figure 3.

La première membrane polymère 10 définit les conditions de diffusion, et crée ainsi une condition de diffusion limite reproductible, définie par l'épaisseur de la membrane, permettant d'obtenir un signal ampérométrique indépendant du débit du liquide autour du capteur, et de protéger les électrodes des dépôts de particules. Ainsi, le capteur obtenu ne nécessite pas d'entretien pendant une année. S'il est changé au bout d'une année, le capteur n'aura nécessité aucun entretien intermédiaire. La membrane déposée sur les électrodes permet également d'utiliser un potentiostat simple, puisque la membrane protège les électrodes de tout dépôt. La sélectivité du capteur pour la substance oxydoréductible est définie par le potentiel approprié appliqué entre l'électrode de référence et l'électrode de travail, ainsi que par la définition de la polymérisation de la membrane polyHEMA.

Une seconde membrane polymère 12 peut être déposée au-dessus de la première membrane polymère 10, avec par exemple une épaisseur trois à six fois supérieure à celle de la première membrane polymère 10. Une telle seconde membrane 12 peut être réalisée en polysiloxane photopolymérisé sur la plaquette de silicium. Elle a pour fonction de choisir l'espèce à mesurer, tel que l'oxygène dissous. Elle permet également de définir les limites latérales de la résine époxy utilisée pour l'encapsulation finale. L'étape finale d'encapsulation du capteur est ainsi facilitée.

L'électrode de référence est réalisée par une fine couche d'Ag-AgCl sur la plaquette de silicium ou par une structure plane métallique liée à la plaquette ou simplement par un fil lié à la plaquette et composé d'Ag-AgCl, réalisant une pseudo-référence.

Le capteur comprend également des ouvertures dans la seconde couche d'isolant 8 sur le côté de la puce, également relié aux électrodes en dessous, permettant les contacts électriques 14 des fils de liaison pour relier les électrodes à un circuit de mesure externe au capteur ampérométrique. La seconde couche d'isolant 8 étant disposée sur toute la couche métallique pour réaliser les électrodes, ces dernières sont donc directement accessibles sur le côté du capteur à travers cette couche pour réaliser les contacts électriques.

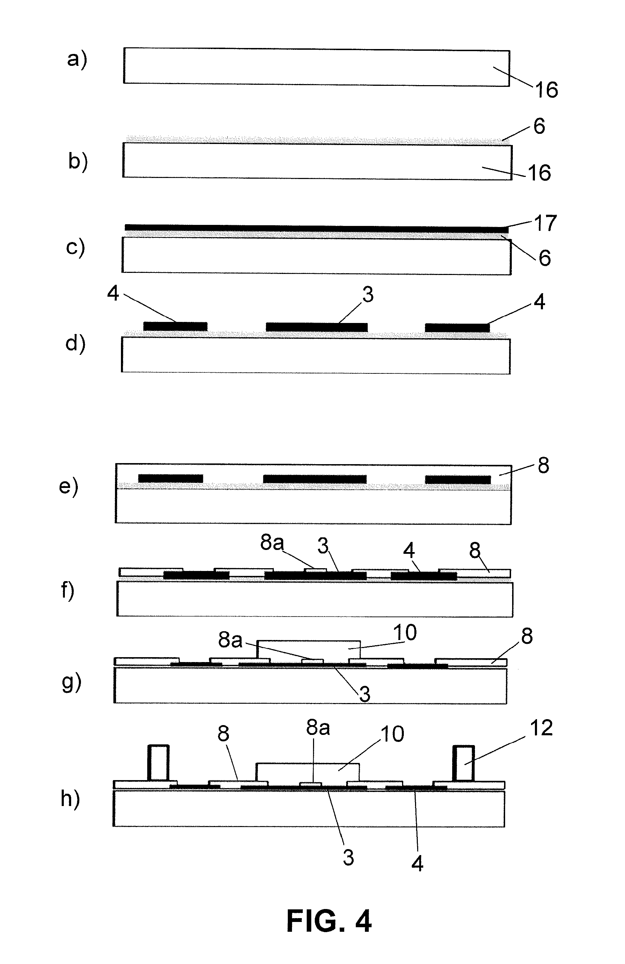

Le capteur selon l'invention peut être obtenu selon le procédé représenté schématiquement sur la figure 4. On part à l'étape a) d'une plaquette de silicium 16. A l'étape b), cette plaquette est oxydée pour former la première couche d'isolant 6 et constituer ainsi le substrat isolant 2. A l'étape c), on dépose sur le substrat une fine couche de métal 17, dans lequel seront formées l'électrode de travail 3 et la contre-électrode 4. A l'étape d), la couche de métal 17 est gravée pour délimiter grossièrement les électrodes 3 et 4. A l'étape e), une seconde couche d'isolant 8 est déposée à basse température sur la couche de métal 17. A l'étape f), on forme les ouvertures dans la couche d'isolant 8 pour laisser apparaitre précisément la surface active de l'électrode de travail 3 et de la contre-électrode 4. Par exemple, dans la figure 1, un ilot 8a d'isolant est maintenu au centre de l'électrode. Cet ilot peut être de diverses tailles, voire se répéter périodiquement sur la surface de l'électrode, et posséder des dimensions microscopiques, de l'ordre de quelques micromètres à quelques dizaines de micromètres, ou nanométriques, inférieure au micromètre. Sa répétition peut être géométrique ou aléatoire, mais homogène sur l'électrode. Pour cela, on utilise un masque photolithographique et un procédé de gravure par attaque chimique, qui permet, en une seule étape, de former l'électrode de travail et la contre-électrode ayant la configuration désirée en utilisant simplement un masque ayant la configuration correspondante. Les autres étapes précédentes peuvent être communes à tous les capteurs, quelle que soit la géométrie des électrodes.

A l'étape g), on dépose par photopolymérisation et au moyen d'un masque approprié, la première membrane polymère 10 polyHEMA sur les ouvertures de la seconde couche d'isolant 8 délimitant l'électrode de travail 3. Comme on l'a vu ci-dessus, la première membrane 10 définit la couche de diffusion et présente une adhésion améliorée du fait de son adhésion préférentielle aux différents éléments de la seconde couche d'isolant 8.

A l'étape h), on dépose par photopolymérisation la seconde membrane polymère 12 à base de polysiloxane pour préparer l'étape d'encapsulation du capteur. En fonction de la forme du masque de photopolymérisation, cette seconde membrane 12 peut recouvrir également la surface de la première membrane polymère 10, et permettre de conférer une autre sélectivité au capteur.

Le capteur de l'invention peut être réalisé selon les procédés de photolithographie classiquement utilisés pour réaliser les composants semi-conducteurs à partir de plaquettes de silicium.

Ainsi, les avantages de la production par lots des plaquettes de silicium permettent une excellente reproductibilité de l'épaisseur des membranes, ainsi qu'une excellente reproductibilité de la sensibilité de la sonde obtenue pour l'espèce oxydoréductible. Comparé aux électrodes standards avec réactifs, le rapport signal/bruit est très élevé en raison de la géométrie de la surface active bien définie des électrodes et de la couche de diffusion bien contrôlée.

En référence à la figure 2, il est représenté une autre variante de réalisation du capteur selon l'invention. Selon cette variante, le substrat 2 a une structure non planaire, obtenue par exemple une attaque chimique anisotrope d'un silicium conducteur dopé de type p. La première couche d'isolant 6, la couche métallique 17 et la seconde couche d'isolant 8 sont appliquées comme décrit ci-dessus. L'électrode de travail 3 et la contre-électrode 4 sont formées par les ouvertures dans la seconde couche d'isolant 8. Une première membrane de poly HEMA est appliquée sur la seconde couche d'isolant 8 et son ouverture définissant l'électrode de travail 3. Une seconde membrane de polysiloxane 12 est déposée pour préparer l'encapsulation. Les contacts électriques 14 sont prévus ainsi que des contacts arrière 18 pour l'électrode de travail 3.

L'électrode de travail 3 a été appliquée en suivant la configuration du substrat 2, de sorte qu'elle est renfoncée dans la plaquette de silicium et est ainsi protégée. De plus, dans cette configuration, le contact de l'électrode de travail est réalisé en utilisant directement la plaquette de silicium.

En référence à la figure 3, il est représenté une autre variante de réalisation du capteur selon l'invention. Les références désignent les mêmes éléments que sur les figures précédentes. Dans cette variante, l'électrode de travail 3 est sous forme d'un réseau de micro-électrodes et des éléments de la première membrane polymère 10 recouvrent la seconde couche d'isolant 8 et les ouvertures microstructurées ou nanostructurées, délimitant l'électrode de travail 3 et la contre-électrode 4. Cependant, ce réseau peut être dimensionné sous la forme de nanostructure répartie aléatoirement mais d' une manière homogène sur l' électrode. L'électrode de référence 20 Ag-AgCl est intégrée au capteur, et est entourée par la deuxième membrane polymère 12, permettant son contact avec le milieu aqueux après encapsulation du capteur dans de la résine. Les contacts électriques sont indiqués par 14.

Le capteur selon l'invention est utilisé dans une sonde ampérométrique pour mesurer la teneur d'une substance oxydoréductible dans un liquide. D'une manière particulièrement avantageuse, le capteur est intégré dans une tête de mesure sèche, donc sans électrolyte, détachable, qui peut être montée de manière amovible à un corps de sonde, comprenant les moyens de traitement et de transmission des données.

Une telle tête détachable 22 est représentée sur la figure 5. Elle comprend un circuit imprimé 23 sur lequel sont montés, du côté opposé au corps de la sonde, le capteur selon l'invention 1 comprenant l'électrode de travail et la contre-électrode, l'électrode de référence, un circuit intégré d'interface pour l'amplification et le traitement du signal 24 pour transformer le signal de courant du capteur 1 en un signal de tension et l'amplifier, ce circuit intégré 24 pouvant également mesurer la température, ainsi qu'un circuit intégré de type mémoire 25. Ce circuit intégré de type mémoire contient les paramètres de calibration de la tête détachable ainsi que les référence de fabrication et un numéro unique d'identification. Ce numéro peut servir à coder la communication avec le corps de sonde. Ainsi, chaque sonde ne peut opérer qu'avec une sélection de tête, sélectionnée à la fabrication. La face arrière du circuit imprimé 23 comprend des contacts simples 26 pour transmettre le signal électrique provenant du corps de la sonde, et proportionnel à l'espèce oxydoréductible à mesurer. Le circuit imprimé 23 et tous ses composants sont encapsulés ou moulés dans un boitier 27 en plastique, tel que du PVC, et sont recouverts d'une couche de résine protectrice polymère, par exemple de l'époxy 28, en laissant accessibles le capteur 1 et l'électrode de référence 20. La tête de mesure de la sonde 22 ne contient donc aucun produit chimique ni réactif et est donc bio-compatible avec l'eau ou tout autre liquide.

Les paramètres de calibration, tels que le zéro ou la sensibilité, et un numéro de codage et d'identification, peuvent être enregistrés dans le circuit de type mémoire 25 de la tête pendant sa fabrication. Ils seront ensuite récupérés par le corps de la sonde pour l'auto-calibration.

La tête de mesure peut être enlevée et remplacée aisément sur place par l'utilisateur sans l'aide d'un technicien spécialisé.

D'une manière avantageuse, deux capteurs selon l'invention peuvent être prévus dans la tête de mesure. Ces capteurs sont montés et connectés de manière à obtenir deux signaux électroniques de l'espèce à mesurer.

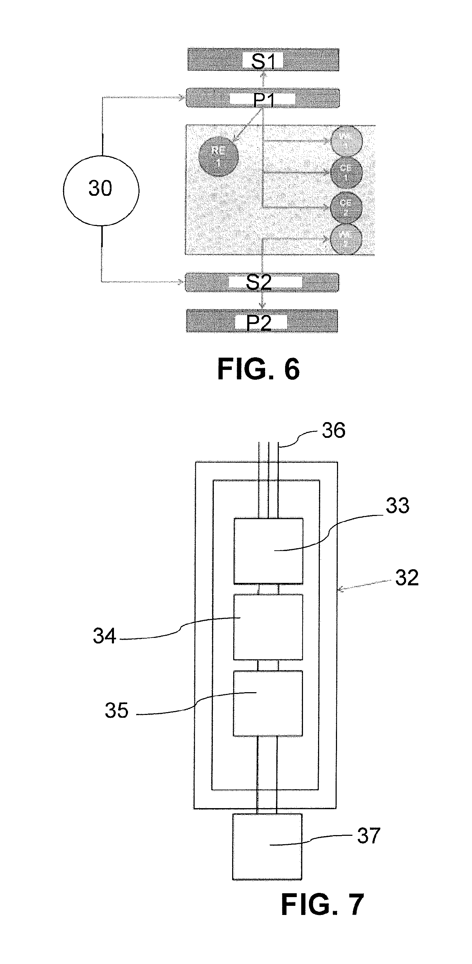

Le schéma de montage des deux capteurs est représenté sur la figure 6. Le circuit comprend une batterie 30, alimentant un premier potentiostat P1 et un second potentiostat P2. Le potentiostat P1 est relié à l'électrode de référence RE1, à l'électrode de travail WE1 et à la contre-électrode CE1 du premier capteur, ainsi qu'à la contre-électrode CE2 du second capteur. Le second potentiostat P2 est relié à l'électrode de travail WE2 du second capteur. Le premier potentiostat P1 donne un premier signal S1 et le second potentiostat P2 donne un second signal S2. Cela permet une redondance dans le signal avec deux signaux chlores mais une seule électrode de référence. Le circuit de traitement du signal peut ensuite combiner linéairement les deux signaux, en délivrant la somme et la différence, de manière à obtenir un signal d'état opérationnel de la sonde, en particulier de la qualité de la mesure de l'espèce électrochimique détectée. Un algorithme simple peut être introduit dans le logiciel du corps de la sonde pour calculer la qualité de la mesure, donc le vieillissement de la sonde, et en particulier pour émettre un signal d'alarme si l'un des deux capteurs est défectueux.

Le boitier 27 de la tête de mesure 22 peut comprendre un pas de vis coopérant avec un filetage correspondant prévu sur le corps de la sonde.

En référence à la figure 7, le corps 32 de la sonde peut être réalisé en plastique ou en métal. Il comprend un circuit imprimé sur lequel sont montés un circuit d'interface 33, un circuit de décodage et de traitement des données 34, tel qu'un microcontrôleur, et des moyens de transmission des données 35 afin de transmettre le signal représentant la teneur de l'espèce oxydoréductible mesurée à l'extérieur de la sonde. Ces moyens de transmission peuvent être un système radio, par exemple GSM, ou un câble électrique. Le corps de la sonde comprend également des moyens de connexion 36, agencés pour relier le circuit imprimé du corps de la sonde aux contacts 26 prévus sur la tête de mesure 22. Il est également prévu une batterie 37, alimentant le circuit imprimé du corps de la sonde. Ces moyens peuvent également être réalisés par onde électromagnétique de faible portée entre la tête de mesure et le corps de la sonde.

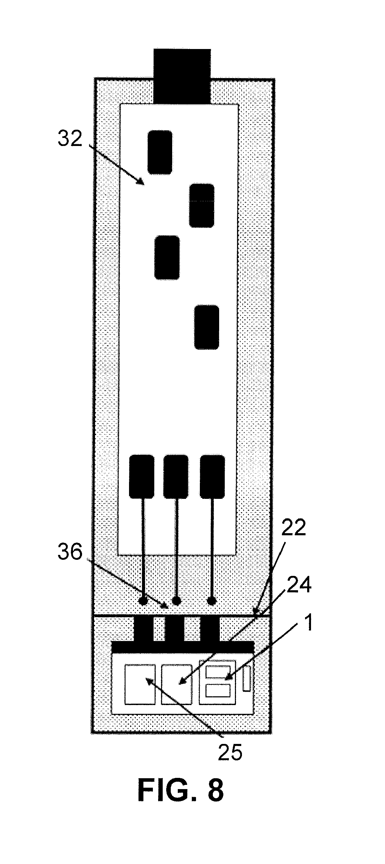

Lorsque la tête de mesure 22 est montée sur le corps 32, on obtient une sonde de mesure telle que représentée sur la figure 8. Lorsque le capteur 1 doit être périodiquement remplacé, seule la tête de mesure 22 doit être changée. Le corps 32 de la sonde qui contient le circuit de traitement des données n'a pas besoin d'être remplacé.

La sonde obtenue permet notamment de mesurer la qualité de l'eau en ligne, directement dans les canalisations. Elle présente l'avantage de résister aux hautes pressions (10 bars), et de ne pas nécessiter de maintenance. Seule la tête de mesure comprenant le capteur peut être facilement changée, par exemple une fois par an. Elle n'utilise pas de réactifs chimiques pour détecter les espèces à analyser et est donc particulièrement écologique et ne peut pas polluer le fluide à mesurer, par exemple de l'eau potable.

Il est bien évident que, dans une autre variante, le capteur peut être intégré dans une sonde d'une seule pièce.

## Revendications

1. Capteur (1) électrochimique ampérométrique destiné à la mesure de la teneur d'une substance oxydoréductible dans un liquide, comprenant un substrat isolant (2), un jeu d'électrodes composé d'une électrode de travail (3), d'une contre-électrode (4) et d'une électrode de référence (20), au moins l'une desdites électrode de travail (3) et contre-électrode (4) étant configurée sur ledit substrat isolant (2), **caractérisé en ce que** au moins l'une desdites électrode de travail (3) et contre-électrode (4) est recouverte d'une couche d'isolant (8), et **en ce que** ladite couche d'isolant (8) comprend au moins une ouverture laissant apparaitre au moins l'une desdites électrode de travail (3) et contre-électrode (4).

2. Capteur selon la revendication 1, **caractérisé en ce que** ladite ouverture a été formée par gravure de la couche d'isolant (8) au moyen d'un masque dont la configuration est variable en fonction de la configuration de l'électrode souhaitée.

3. Capteur selon l'une quelconque des revendications précédentes, **caractérisé en ce qu'**il comprend en outre au moins une première membrane polymère (10) déposée dans ladite ouverture.

4. Capteur selon la revendication 3, **caractérisé en ce que** ladite membrane (10) recouvre entièrement ladite ouverture en débordant sur la couche d'isolant (8) par toute sa zone périphérique.

5. Capteur selon l'une quelconque des revendications 3 et 4, **caractérisé en ce que** l'électrode de travail est non-planaire et est disposée dans le substrat isolant, ladite membrane (10) étant réalisée de sorte que sa surface supérieure est au niveau du substrat isolant comprenant la contre-électrode.

6. Capteur selon l'une quelconques des revendications 3 à 5, **caractérisé en ce qu'**il comprend une première membrane polymère (10) pour définir une couche de diffusion et une seconde membrane polymère (12) déposée sur la première membrane (10) pour sélectionner les espèces à mesurer.

7. Capteur selon l'une quelconque des revendications précédentes, **caractérisé en ce que** la couche d'isolant (8) comprend plusieurs ouvertures séparées par des ilots (8a) de matériau isolant, de manière à laisser apparaitre un ensemble d'éléments d'électrode.

8. Capteur selon les revendications 3 et 7, **caractérisé en ce que** la première membrane polymère (10) recouvre toutes les ouvertures.

9. Capteur selon les revendications 3 et 7, **caractérisé en ce que** la première membrane polymère (10) comporte plusieurs éléments de membrane recouvrant respectivement chaque ouverture en débordant individuellement sur la couche d'isolant (8) par toute leur zone périphérique respective.

10. Capteur selon l'une quelconque des revendications précédentes **caractérisé en ce que** la couche d'isolant (8) comprend des ouvertures nanostructurées homogènes.

11. Capteur selon l'une quelconque des revendications précédentes, **caractérisé en ce que** le substrat (2) est réalisé dans un matériau choisi parmi le groupe comprenant le silicium, le verre, les céramiques et le quartz.

12. Capteur selon l'une quelconque des revendications précédentes, **caractérisé en ce que** au moins l'une des électrodes de travail (3) et contre-électrode (4) présente une forme choisie parmi le groupe de forme circulaire, microperforée ou interdigitée.

13. Capteur selon l'une quelconque des revendications précédentes, **caractérisé en ce qu'**il comprend des moyens de connexion pour relier les électrodes à un circuit de mesure, lesdits moyens de connexion étant directement reliés aux électrodes.

14. Procédé de fabrication d'un capteur selon l'une quelconque des revendications 1 à 13, **caractérisé en ce qu'**il comprend les étapes de:
- déposer sur un substrat isolé (2) une couche d'un matériau conducteur (17),
- graver ledit matériau conducteur (17) pour délimiter au moins l'une desdites électrode de travail (3) et contre-électrode (4),
- déposer sur la couche de matériau conducteur (17) une couche d'isolant (8), et
- réaliser dans la couche d'isolant (8) au moins une ouverture laissant apparaitre au moins l'une desdites électrode de travail (3) et contre-électrode (4).

15. Procédé selon la revendication 14, **caractérisé en ce que** l'étape pour réaliser au moins une ouverture dans la couche d'isolant (8) est réalisée par gravure à l'aide d'un masque photolithographique dont la configuration est variable en fonction de la configuration de l'électrode souhaitée.

16. Procédé selon l'une quelconque des revendications 14 et 15, **caractérisé en ce qu'**il comprend en outre une étape consistant à couvrir la couche d'isolant (8) et ses ouvertures d'au moins une membrane polymère (10).

17. Sonde ampérométrique pour mesurer la teneur d'une substance oxydoréductible dans un liquide comprenant au moins un capteur (1) selon l'une quelconque des revendications 1 à 13.

18. Sonde selon la revendication 17, **caractérisée en ce qu'**elle comprend un corps (32) contenant des moyens de traitement des données et des moyens de transmission et une tête (22) sèche, sans électrolyte et détachable, dans laquelle est disposé le capteur (1).

19. Sonde selon la revendication 18, **caractérisée en ce que** ladite tête de mesure détachable est jetable et contient les informations de calibration de la sonde et un identificateur numérique unique de la tête.
